# EUROPEAN PATENT APPLICATION

(11) **EP 3 730 270 A1**
(43) Date of publication of application: **28.10.2020**
(21) Application number: 18891593.8
(22) Date of filing: 18.12.2018
(51) Int. Cl.: B29C 33/38, B29D 11/00, B29L 11/00

(54) **PRODUCTION METHOD FOR SPECTACLE LENS MOLDING MOLD AND PRODUCTION METHOD FOR SPECTACLE LENS**

(30) Priority: 19.12.2017 JP 2017242803
(71) Applicant: Hoya Lens Thailand Ltd., Pathumthani 12130 (TH)
(72) Inventor: TOYOSHIMA Yoshiaki, Tokyo 160-8347 (JP)
(74) Representative: Betten & Resch
(86) International application number: PCT/JP2018/046521
(87) International publication number: WO 2019/124353

(57) **Abstract**

Provided are a method with which a molding mold having a minute recess can be made with high accuracy, and the like.

According to the present invention, a method for producing a molding mold for use in the production of a spectacle lens 1 in which a minute protrusion 6 is formed on one surface thereof includes a master mold preparation step of preparing a master mold 23 that has a base material 20 and a coating portion 22, the coating portion being made of a nickel alloy, coating the base material, and having a surface formed into a shape corresponding to the shape of the one surface of the spectacle lens; a cutting step of cutting a recess corresponding to the protrusion into the surface of the coating portion of the master mold; a transfer mold production step of producing a transfer mold 24 by performing electroforming on the coating portion of the master mold in which the recess has been cut, the transfer mold having a surface that is complementary to the surface of the coating portion; and a first mold production step of producing a first mold 14 by performing electroforming on the surface of the transfer mold, the first mold having a surface that is complementary to the surface of the transfer mold.

## Description

### Technical Field

The present disclosure relates to a method for producing a spectacle lens molding mold and a method for producing a spectacle lens, and particularly relates to a method for producing a molding mold for a spectacle lens that has a protrusion on a surface thereof and a method for producing a spectacle lens that has a protrusion on a surface thereof.

### Background Art

Patent Document 1 discloses a spectacle lens that suppresses the progression of ametropia such as myopia, and in which minute protrusions (segments) having a substantially hemispherical surface shape with a diameter of about 1 mm, for example, are formed on a convex surface of a plastic lens. In a commonly known method for producing a spectacle lens, a thermosetting resin is used as the material of a spectacle lens, and a mold made of a glass material is used as the molding mold.

When producing a spectacle lens, such as the one disclosed in Patent Document 1, that has minute protrusions on a convex surface thereof with use of a molding mold made of a glass material, a method can be used in which minute recesses that are complementary to the minute protrusions are formed in one molding surface of the molding mold made of the glass material.

### Citation List

### Patent Documents

Patent Document 1: US 2017/131567 A1

### Summary of Invention

### Technical Problem

Examples of the method for forming minute recesses in a molding surface of a molding mold made of a glass material include grinding and polishing, laser beam machining, and the like.

These methods, however, are highly likely to cause chipping or the like of the glass material during the processing and cannot satisfy conditions required of the minute recesses, such as processing accuracy of curved surfaces, surface roughness, and dimensional accuracy, and therefore make it difficult to achieve the necessary accuracy for a molding mold made of a glass material for use in production of a spectacle lens that has a minute protrusion on a convex surface thereof.

Moreover, when mass-producing lenses through casting, a large quantity of molding molds are needed, but it is difficult to provide a large quantities of molding molds inexpensively and quickly.

The present invention was made in view of the above-described problems, and an object thereof is to provide a method with which a highly accurate spectacle lens molding mold having a minute recess can be produced, and so on.

Another object of the present invention is to inexpensively and quickly provide a large quantity of molding molds for use in production of lenses through casting.

### Solution to Problem

According to the present invention, provided is a method for producing a molding mold for use in production of a spectacle lens in which a minute protrusion is formed on one surface thereof, the method including:
a master mold preparation step of preparing a master mold that has a base material and a coating portion, the coating portion being made of a nickel alloy, coating the base material, and having a surface formed into a shape corresponding to a shape of the one surface of the spectacle lens;
a cutting step of cutting a recess corresponding to the protrusion into a surface of the coating portion of the master mold;
a transfer mold production step of producing a transfer mold by performing electroforming on the coating portion of the master mold in which the recess has been cut, the transfer mold having a surface that is complementary to the surface of the coating portion; and
a first mold production step of producing a first mold by performing electroforming on the surface of the transfer mold, the first mold having a surface that is complementary to the surface of the transfer mold.

With the above-described configuration, the minute recess is formed in the master mold by cutting the surface of the coating portion made of the nickel alloy, which is a ductile material, the transfer mold is produced from the master mold through electroforming, and the first mold is produced from the transfer mold through electroforming. Therefore, unlike a case where a recess is formed directly in a surface of a molding mold material made of a relatively brittle material such as a glass material, chipping and the like do not occur. As a result, it is possible to make a highly accurate spectacle lens molding mold having a minute recess.

Also, with the method for producing a spectacle lens molding mold of the present invention, a large quantity of molding molds for use in production of spectacle lenses through casting can be provided inexpensively and quickly.

According to another aspect of the present invention, provided is a method for producing a spectacle lens with use of a molding mold that has been produced using the above-described method for producing a molding mold, the method including:
a step of defining a lens molding space by holding the first mold and a second mold spaced apart from each other by a predetermined distance, the second mold having a surface formed into a shape corresponding to a shape of another surface of the spectacle lens;
a resin loading step of loading a resin into the space between the first mold and the second mold; and
a release step of removing a spectacle lens composed of the cured resin from the first mold and the second mold.

According to another preferred aspect of the present invention, the method further includes:
prior to the resin loading step,
an HC material application step of applying a hard coating material to the surface of at least one of the molds.

A surface of the protrusion has a substantially hemispherical shape.

The resin is a thermosetting resin.

### Advantageous Effects of Invention

According to the present invention, an object is to provide a molding mold production method with which a highly accurate molding mold having a minute recess for use in production of a spectacle lens can be produced.

According to the present invention, it is also possible to inexpensively and quickly provide a large quantity of molding molds for use in production of spectacle lenses through casting.

### Brief Description of Drawings

FIG. 1 is a cross-sectional view showing the shape of a spectacle lens that is molded in a molding mold that has been produced using a method for producing a spectacle lens molding mold according to a preferred embodiment of the present invention.
FIG. 2 shows the molding mold produced using the method for producing a spectacle lens molding mold according to the preferred embodiment of the present invention.
FIG. 3A is a diagram (first diagram) for illustrating a method for producing a first mold of the molding mold shown in FIG. 2.
FIG. 3B is a diagram (second diagram) for illustrating the method for producing a first mold of the molding mold shown in FIG. 2.
FIG. 3C is a diagram (third diagram) for illustrating the method for producing a first mold of the molding mold shown in FIG. 2.
FIG. 3D is a diagram (fourth diagram) for illustrating the method for producing a first mold of the molding mold shown in FIG. 2.
FIG. 3E is a diagram (fifth diagram) for illustrating the method for producing a first mold of the molding mold shown in FIG. 2.
FIG. 3F is a diagram (sixth diagram) for illustrating the method for producing a first mold of the molding mold shown in FIG. 2.
FIG. 3G is a diagram (seventh diagram) for illustrating the method for producing a first mold of the molding mold shown in FIG. 2.
FIG. 3H is a diagram (eighth diagram) for illustrating the method for producing a first mold of the molding mold shown in FIG. 2.
FIG. 4A is a diagram (first diagram) for illustrating a method for producing a spectacle lens with use of the molding mold shown in FIG. 2.
FIG. 4B is a diagram (second diagram) for illustrating the method for producing a spectacle lens with use of the molding mold shown in FIG. 2.
FIG. 4C is a diagram (third diagram) for illustrating the method for producing a spectacle lens with use of the molding mold shown in FIG. 2.
FIG. 4D is a diagram (fourth diagram) for illustrating the method for producing a spectacle lens with use of the molding mold shown in FIG. 2.
FIG. 4E is a diagram (fifth diagram) for illustrating the method for producing a spectacle lens with use of the molding mold shown in FIG. 2.
FIG. 5 is a cross-sectional view showing a spectacle lens produced using another method for producing a spectacle lens with use of the molding mold that has been produced using the method for producing a spectacle lens molding mold according to the preferred embodiment of the present invention.
FIG. 6A is a diagram (first diagram) for illustrating the method for producing the spectacle lens in FIG. 5.
FIG. 6B is a diagram (second diagram) for illustrating the method for producing the spectacle lens in FIG. 5.
FIG. 6C is a diagram (third diagram) for illustrating the method for producing the spectacle lens in FIG. 5.
FIG. 6D is a diagram (fourth diagram) for illustrating the method for producing the spectacle lens in FIG. 5.
FIG. 6E is a diagram (fifth diagram) for illustrating the method for producing the spectacle lens in FIG. 5.
FIG. 6F is a diagram (sixth diagram) for illustrating the method for producing the spectacle lens in FIG. 5.

### Description of Embodiments

Hereinafter, a method for producing a spectacle lens molding mold according to a preferred embodiment of the present invention and a method for producing a spectacle lens will be described in detail with reference to the drawings.

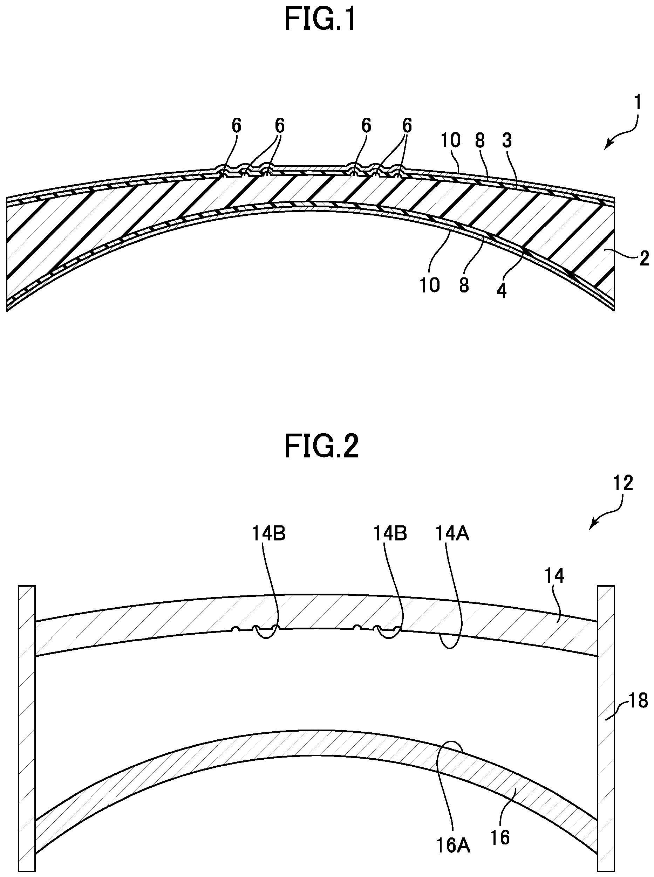

FIG. 1 is a cross-sectional view showing the shape of a spectacle lens 1 molded in a molding mold that has been produced using the method for producing a spectacle lens molding mold according to the preferred embodiment of the present invention.

As shown in FIG. 1, the spectacle lens 1 includes a spectacle lens main body 2, and the spectacle lens main body 2 has a convex surface 3 and a concave surface 4. The spectacle lens 1 further has hard coating layers 8 formed on the convex surface 3 and the concave surface 4 of the spectacle lens main body 2, as well as antireflection films (AR films) 10 formed on the surfaces of the hard coating layers 8.

A plurality of minute protrusions 6 are provided on the convex surface 3 of the spectacle lens main body 2 such that the protrusions 6 are arranged centered on the central axis of the spectacle lens 1 at regular intervals in the circumferential direction and the radial direction. The surface of each protrusion 6 has a substantially hemispherical shape with a diameter of 1 mm, a height of 0.8 µm, and a curvature of 86 mR.

The spectacle lens main body 2 is made of a thermosetting resin such as a thiourethane, allyl, acrylic, or epithio resin, for example. Note that other resins with which a desired refractivity can be obtained may also be chosen as the resin constituting the spectacle lens main body 2.

A thermoplastic resin or a UV-curable resin, for example, can be used as the material of the hard coating layers 8.

As disclosed in Patent Document 1 above, it is known that the progression of ametropia, such as myopia, of a spectacle wearer can be suppressed by forming a minute protrusion (segment) on a convex surface (object-side surface) of a spectacle lens. This is based on the principle that forming a minute protrusion whose surface has a curvature that is different from the curvature of the convex surface of the spectacle lens makes it possible for light to be also focused on a position other than the retina, thereby suppressing the progression of myopia.

Here, the refractive power of a minute protrusion is preferably 2.00 to 5.00 diopters greater than the refractive power of a base portion of the spectacle lens. Also, the diameter of a minute protrusion is preferably about 0.8 to 2.0 mm. Note that the refractive power of a lens depends on the refractive index of the material thereof, the curve (radius of curvature) of a front surface, the curve (radius of curvature) of a back surface, and the thickness of the lens. Therefore, the curve (radius of curvature) of a minute protrusion and the thickness (height of the minute protrusion) thereof are preferably determined such that the refractive power of the minute protrusion is 2.00 to 5.00 diopters greater than the refractive power of the base portion of the spectacle lens. Specifically, it is preferable that the height of the minute protrusion is 0.1 to 10 µm, and the curvature of the minute protrusion is 50 to 250 mmR. Moreover, it is preferable that the distance between adjacent minute protrusions is approximately equal to the value of the radius of the minute protrusions. Furthermore, it is preferable that the plurality of minute protrusions are substantially uniformly arranged near the center of the lens.

Next, a molding mold that has been produced using the method for producing a molding mold of the preferred embodiment of the present invention and that is used to produce a spectacle lens 1 will be described.

FIG. 2 is a schematic cross-sectional view showing a molding mold that has been produced according to the preferred embodiment of the present invention. As shown in FIG. 2, a molding mold 12 that is used to produce a spectacle lens 1 includes a first mold 14 having a concave molding surface 14A, a second mold 16 having a convex molding surface 16A, and a hollow cylindrical gasket 18. The first mold 14 and the second mold 16 are arranged inside the gasket 18 such that the molding surfaces 14A and 16A oppose each other.

The first mold 14 is produced through electroforming and is mainly made of a nickel alloy for example, and the molding surface 14A thereof has a predetermined shape. More specifically, recesses 14B are formed in the molding surface 14A of the first mold 14, the recesses 14B having a shape corresponding to that of the protrusions 6 formed on the convex surface 3 of the spectacle lens main body 2.

The second mold 16 is made of glass, and the gasket 18 is composed of lens molding tape made of PET, a silicone-based pressure-sensitive adhesive, and a low-density polyethylene.

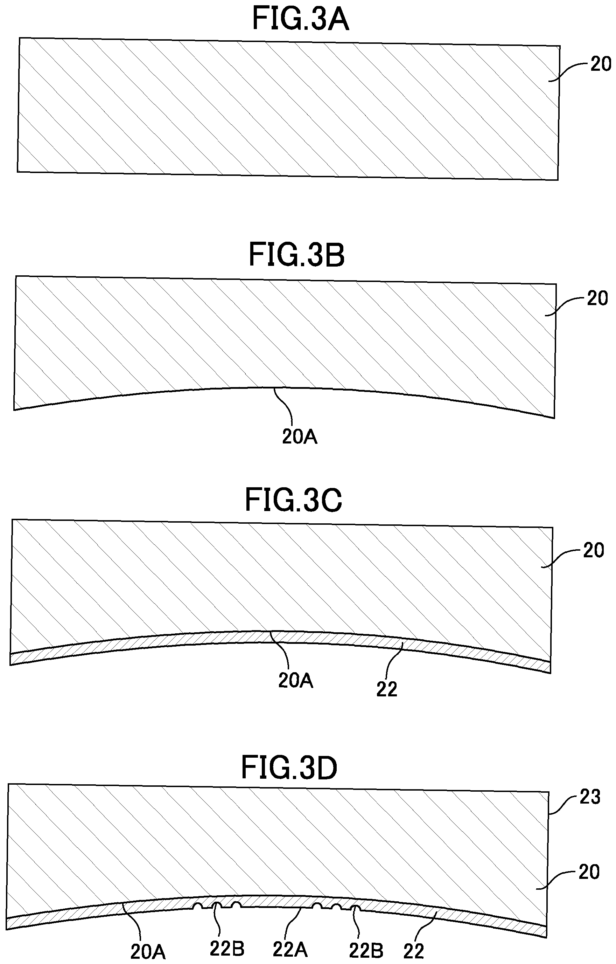

Hereinafter, a method for producing the first mold of the molding mold shown in FIG. 2 will be described. FIGS. 3A to 3H are diagrams for illustrating the method for producing the first mold of the molding mold shown in FIG. 2.

First, as shown in FIG. 3A, a solid cylindrical (disc-shaped) base material 20 made of stainless steel is prepared.

Next, as shown in FIG. 3B, one face (lower face in FIG. 3B) of the base material 20 is cut to form a concave surface 20A.

Next, Ni-P (electroless nickel plating) is applied to the concave surface 20A of the base material 20 to form a coating layer 22 made of a nickel alloy on the concave surface 20A. Furthermore, as shown in FIG. 3C, the coating layer 22 is cut such that the surface thereof has a desired curvature corresponding to the convex surface 3 of the spectacle lens 1. As a result, the surface (concave surface) 22A of the coating layer 22 has a shape that is complementary to the convex surface 3 of the spectacle lens 1. The processes that have been described with reference to FIGS. 3A to 3C correspond to a master mold preparation step.

Note that the master mold preparation step is not limited to the above-described processes, and may be any process through which a mold in which the final curvature of the surface of the coating layer 22 is a desired curvature corresponding to the convex surface 3 of the spectacle lens 1 can be prepared.

For example, a method may also be adopted in which, in the process of cutting the base material (FIG. 3B), the surface of the base material is precisely cut so as to have a desired curvature corresponding to the convex surface 3 of the spectacle lens 1, then, Ni-P (electroless nickel plating) is evenly applied to the precisely cut surface of the base material, and the coating layer 22 whose surface has the desired curvature can thereby be obtained. In this method, cutting of the coating layer 22 formed by Ni-P (electroless nickel plating) is omitted.

Next, as shown in FIG. 3D, the substantially hemispherical recesses 22B are formed through ultra-precision micromachining at positions corresponding to the protrusions 6 of the spectacle lens 1 on the concave surface 22A of the coating layer 22 made of Ni-P (ductile material). A master mold 23 is produced as a result of these processes. This process corresponds to a cutting step.

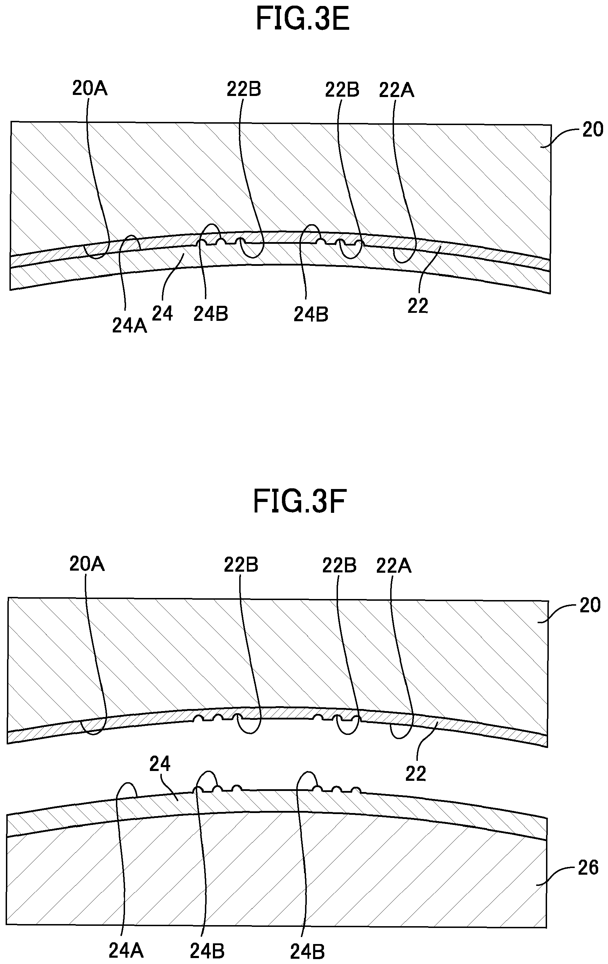

Next, as shown in FIG. 3E, electroforming is performed on the concave surface 22A of the coating layer 22 of the master mold 23 to deposit a nickel alloy along the concave surface 22A, and a transfer mold 24 is thus formed. This process corresponds to a transfer mold production step.

The concave surface 22A of the coating layer 22 is transferred to a surface (convex surface) 24A of the transfer mold 24 that is in contact with the coating layer 22, and the convex surface 24A has a shape that is complementary to the concave surface 22A. Therefore, protrusions 24B corresponding to the recesses 22B are formed on the concave surface 22A.

Next, as shown in FIG. 3F, the transfer mold 24 is removed from the master mold 23. Then, a support member 26 is attached to a rear portion of the transfer mold 24 with use of an adhesive. Note that, for example, a member made of stainless steel or the like is used as the support member 26.

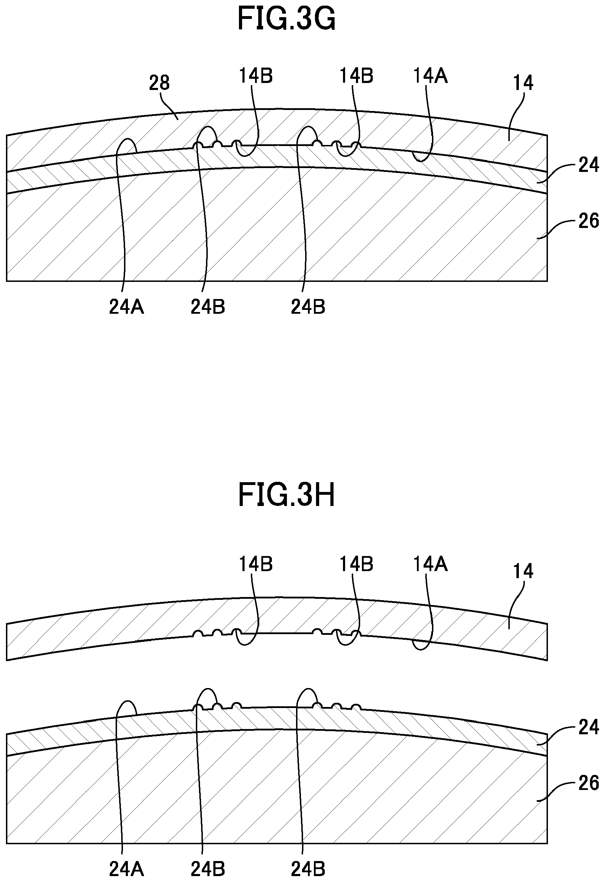

Next, as shown in FIG. 3G, a nickel alloy 28 is deposited on the surface of the convex surface 24A of the transfer mold 24 through electroforming to form the first mold 14. This process corresponds to a first mold production step. The convex surface 24A of the transfer mold 24 is transferred to the surface (concave surface) 14A of the first mold 14 that is in contact with the transfer mold 24, and thus has a complementary shape. Moreover, the recesses 14B corresponding to the protrusions 24B are formed in the concave surface 14A. As shown in FIG. 3H, the first mold 14 is removed from the transfer mold 24, and thus, the first mold 14 is obtained.

Note that, in the case where a plurality of spectacle lenses having identical structures are to be produced simultaneously, a plurality of first molds can be produced by repeating this process a plurality of times.

In the above-described manner, the first mold 14 of the molding mold shown in FIG. 2 can be produced.

Moreover, simultaneously with these operations, the second mold 16 and the gasket 18 are produced. The second mold 16 can be produced by, for example, processing one face of a solid cylindrical base material made of glass into a shape corresponding to the concave surface 4 of the spectacle lens through grinding and polishing. This process corresponds to a second molding mold preparation step.

With the method for producing a molding mold of the preferred embodiment, the following effects are achieved.

The recesses 22B are formed in the master mold 23 by cutting the surface of the coating layer 22 made of a nickel alloy, which is a ductile material, the transfer mold 24 is produced from the master mold 23 through electroforming, and the first mold 14 is produced from the transfer mold 24 through electroforming. Therefore, the first mold 14 is unlikely to chip. Thus, a spectacle lens molding mold 12 having minute recesses 14B can be made with high accuracy.

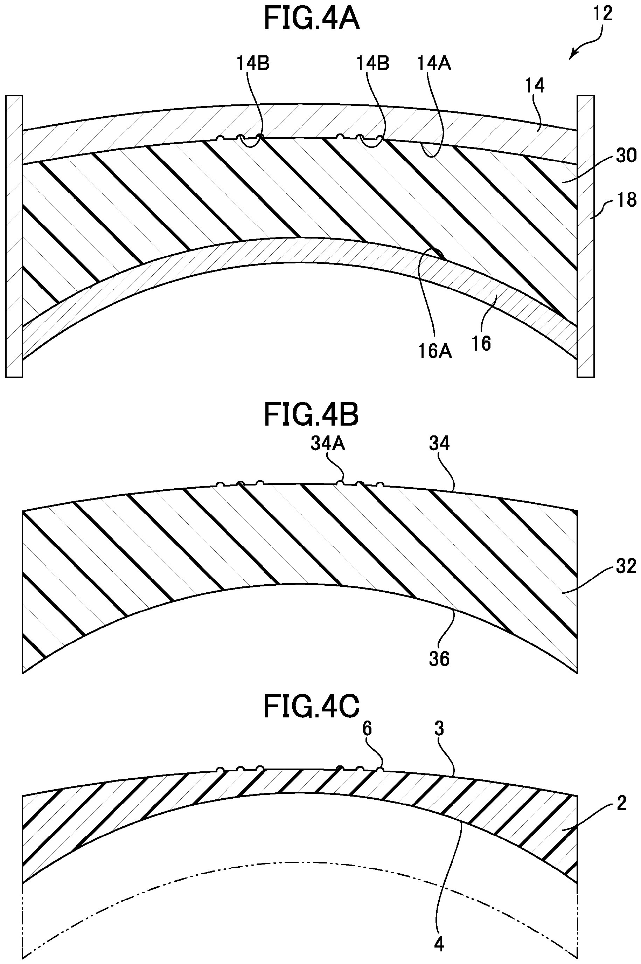

Next, a method for molding the spectacle lens 1 with use of the molding mold that has been produced in the above-described manner will be described. FIGS. 4A to 4F are diagrams for illustrating the method for molding the spectacle lens 1 with use of the molding mold shown in FIG. 2.

First, as shown in FIG. 4A, the first mold 14, the second mold 16, and the gasket 18 are combined to form the molding mold 12, and a thermosetting resin 30 is loaded into an internal space (cavity) of the molding mold 12. This process corresponds to a resin loading step. Then, the molding mold 12 is heated until the thermosetting resin 30 cures.

Next, as shown in FIG. 4B, after the molding mold 12 is cooled, a semi-finished lens 32 made of the cured thermosetting resin 30 is released from the molding mold 12. This process corresponds to a release step. One face 34 of the semi-finished lens 32 constitutes a convex surface 34 to which the shape of the molding surface 14A of the first mold 14 has been transferred. A plurality of protrusions 34A are formed on a central portion of the convex surface 34. The other face 36 of the semi-finished lens 32 constitutes a concave surface 36 to which the convex surface 16A of the second mold 16 has been transferred.

Next, as shown in FIG. 4C, the concave surface 36 of the semi-finished lens 32 is cut until the thickness of the semi-finished lens 32 becomes the thickness of the lens main body 2, and is then polished. Thus, the spectacle lens main body 2 that has the convex surface 3 and the concave surface 4 and in which the protrusions 6 are formed on the convex surface 3 is produced.

Note that, although the processes for making the semi-finished lens in which the concave surface is cut and polished have been described in the present embodiment, the present invention is also applicable to a finished lens in which the concave surface is not cut and polished.

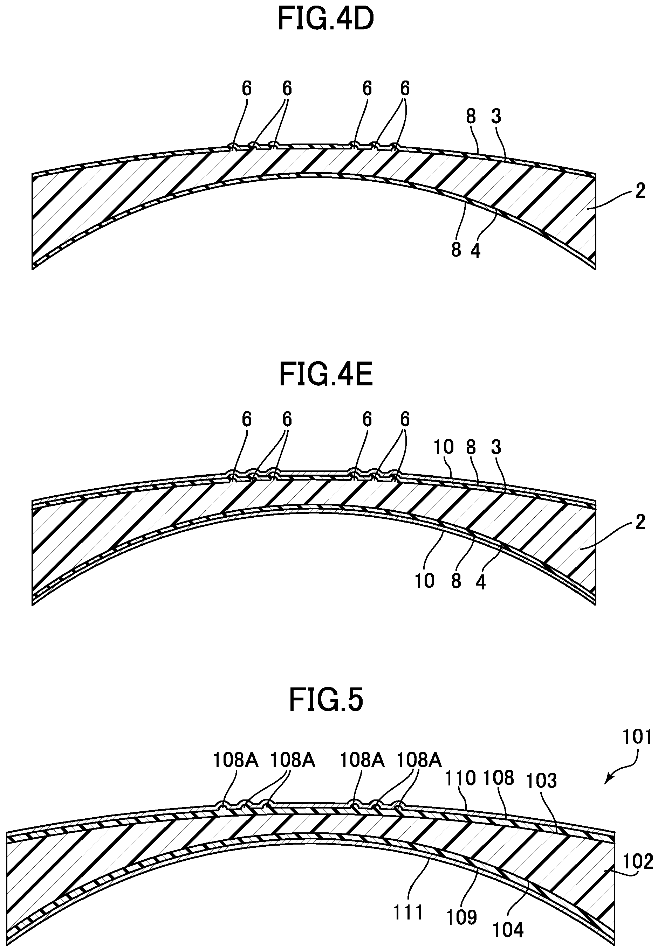

Next, as shown in FIG. 4D, the hard coating layers 8 are formed on the convex surface 3 and the concave surface 4 of the spectacle lens main body 2. The hard coating layers 8 can be formed, for example, using a method (dip coating) in which the spectacle lens main body 2 is dipped into a hard coating solution such as a silicone resin, spin coating, or the like.

Next, as shown in FIG. 4E, the antireflection films 10 are formed on the surfaces of the hard coating layers 8. The antireflection films 10 can be formed by, for example, depositing layers of an antireflection agent, such as ZrO2, MgF2, or AL2O3, through vacuum deposition.

The spectacle lens is produced as a result of the above-described processes.

Moreover, according to the present embodiment, since a plurality of first molds 14 having identical shapes can be reproduced from the transfer mold 24, spectacle lenses having identical shapes can be produced simultaneously with ease.

Next, another method for producing a spectacle lens with use of the molding mold that has been produced using the method for producing a molding mold according to the above-described embodiment will be described.

FIG. 5 is a schematic cross-sectional view of a spectacle lens 101 produced using the other method for producing a spectacle lens and the molding mold that has been produced using the method for producing a spectacle lens molding mold according to the preferred embodiment of the present invention.

As shown in FIG. 5, the spectacle lens 101 includes a spectacle lens main body 102. The spectacle lens main body 102 has a convex surface 103 that is formed to have a predetermined curvature and a concave surface 104. The spectacle lens 101 further has hard coating layers 108 and 109 that are formed on the convex surface 103 and the concave surface 104 of the spectacle lens main body 102, as well as antireflection films (AR film) 110 and 111 that are formed on the surfaces of the hard coating layers 108 and 109.

Protrusions 108A are formed on the surface of the hard coating layer 108 on the convex surface 103 side, and the protrusions 108A are arranged around the central axis at regular intervals in the circumferential direction and the axial direction. The surface of each protrusion 108A has a hemispherical shape with a diameter of 1 mm, a height of 0.8 µm, and a curvature of 86 mR. The spectacle lens main body 102 is made of a thermosetting resin such as a thiourethane, allyl, acrylic, or epithio resin, for example, for example. Note that other resins with which a desired refractivity can be obtained may also be chosen as the resin constituting the spectacle lens main body 102.

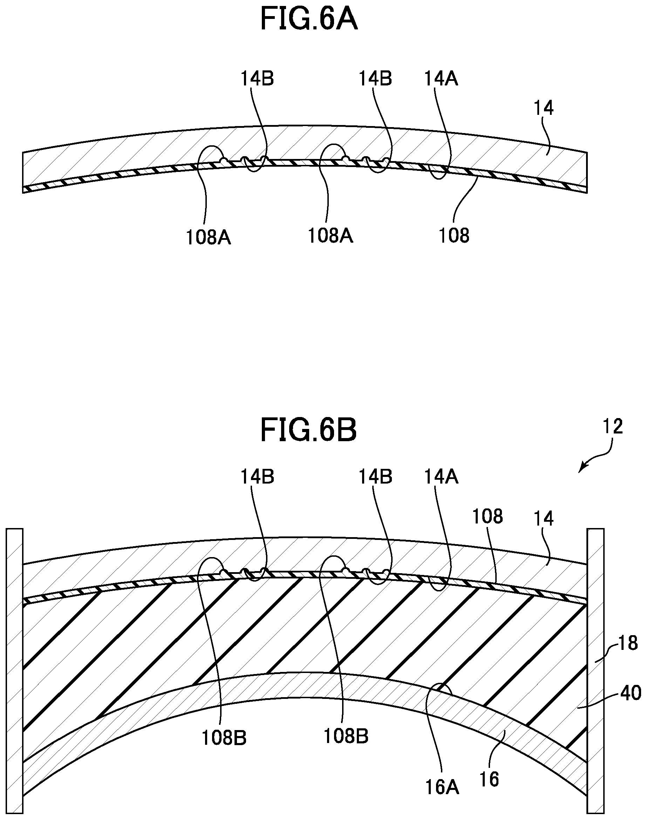

Next, the method for producing a spectacle lens with which the spectacle lens 101 is produced will be described. FIGS. 6A to 6F are diagrams for illustrating this method for producing a spectacle lens.

First, as shown in FIG. 6A, a hard coating solution is applied to the molding surface 14A of the first mold 14, spread over the entire molding surface 14A through spin coating or dip coating, and is then cured. This process corresponds to an HC material application step. The hard coating layer 108 is formed on the molding surface 14A of the first mold 14 by performing this process. At this time, the hard coating solution enters the recesses 14B in the molding surface 14A. Thus, the protrusions 108A are formed on the surface of the hard coating layer 108 after the hard coating solution has cured.

Next, as shown in FIG. 6B, the first mold 14, the second mold 16, and the gasket 18 are assembled to form the molding mold 12, and a thermosetting resin 40 is loaded into the internal space (cavity) of the molding mold 12. This process corresponds to the resin loading step. Then, the molding mold 12 is heated until the thermosetting resin 40 cures.

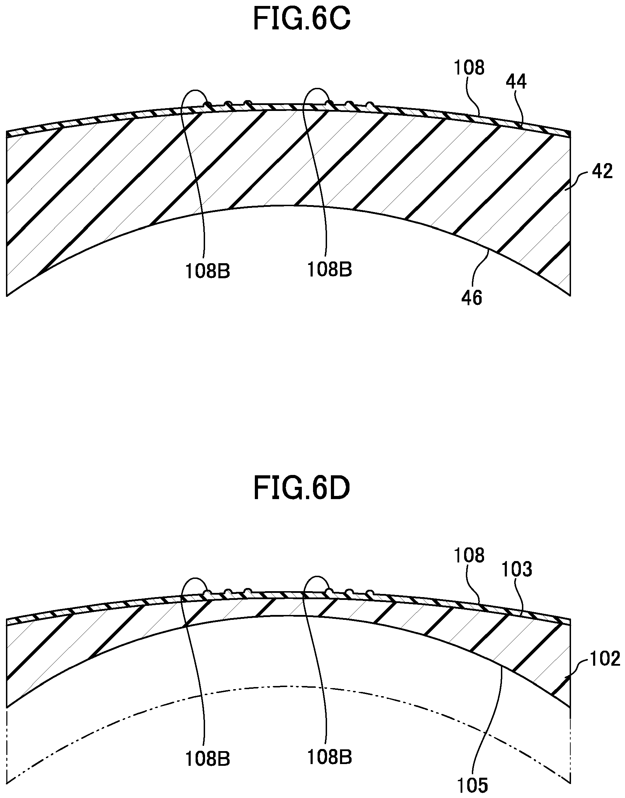

Next, as shown in FIG. 6C, after the molding mold 12 is cooled, a semi-finished lens 42 made of the cured thermosetting resin 40 is released from the molding mold 12. This process corresponds to the release step. The hard coating layer 108 is integral with a convex surface 44 side of the semi-finished lens 42.

Next, as shown in FIG. 6D, a concave surface 46 of the semi-finished lens 42 is cut until the thickness of the semi-finished lens 42 becomes the thickness of the spectacle lens main body 102, and is then polished. Thus, the spectacle lens main body 102 having the convex surface 103 and the concave surface 105 is produced.

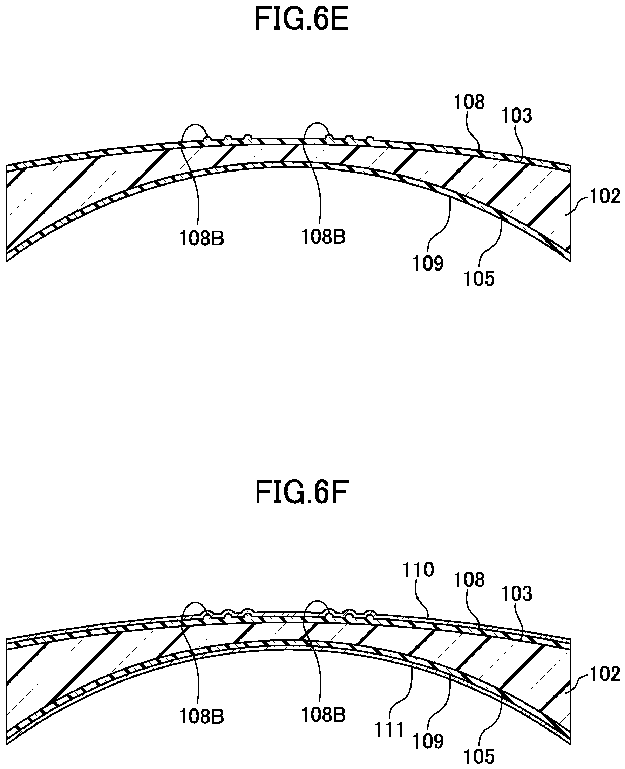

Next, as shown in FIG. 6E, the hard coating layer 109 is formed on the concave surface 104 of the spectacle lens main body 102. The hard coating layer 109 can be formed through spin coating, for example.

Next, as shown in FIG. 6F, the antireflection films 110 and 111 are formed on the surfaces of the hard coating layers 108 and 109. The antireflection films 110 and 111 can be formed by, for example, depositing layers of an antireflection agent, such as ZrO2, MgF2, or AL2O3, through vapor deposition.

The spectacle lens is produced as a result of the above-described processes.

With this method for producing a spectacle lens, the following additional effects are achieved.

In the HC material application step, the hard coating layer 108 is formed by applying the hard coating solution to the first mold 14, and after that, the thermosetting resin 40 is loaded into the molding mold 12. Therefore, the protrusions 108A of the spectacle lens 101 can be reliably formed.

Note that the present invention is not limited to the foregoing embodiments and the like, and changes may be made thereto as appropriate without departing from the scope of the technical idea of the present disclosure.

For example, in the foregoing embodiment, a case where the hemispherical protrusions 6 are formed on the convex surface 3 of the spectacle lens main body 2 has been described; however, the shape of the protrusions 6 is not limited to a hemispherical shape. Moreover, protrusions may be formed on the concave surface 4.

Furthermore, in the foregoing embodiments, the spectacle lenses are produced through casting using a thermosetting resin as the resin material; however, the present invention is also applicable to a case where a spectacle lens is produced through injection using a thermoplastic resin as the resin material.

### List of Reference Numerals

- 1: Spectacle lens
- 2: Spectacle lens main body
- 3: Convex surface
- 4: Concave surface
- 6: Protrusion
- 8: Hard coating layer
- 10: Antireflection film
- 12: Molding mold
- 14: First mold
- 14A: Molding surface
- 14B: Recess
- 16: Second mold
- 16A: Convex surface (Molding surface)
- 18: Gasket
- 20: Base material
- 20A: Concave surface
- 22: Coating layer
- 22A: Concave surface
- 22B: Recess
- 23: Master mold
- 24: Transfer mold
- 24A: Convex surface
- 24B: Protrusion
- 26: Support member
- 28: Nickel alloy
- 30: Thermosetting resin
- 32: Semi-finished lens
- 34: Convex surface
- 34A: Protrusion
- 36: Concave surface
- 40: Thermosetting resin
- 42: Semi-finished lens
- 44: Convex surface
- 46: Concave surface
- 102: Spectacle lens main body
- 103: Convex surface
- 104: Concave surface
- 105: Concave surface
- 108: Hard coating layer
- 108A: Protrusion
- 109: Hard coating layer
- 110: Antireflection film

## Claims

1. A method for producing a molding mold for use in production of a spectacle lens in which a minute protrusion is formed on one surface thereof, the method comprising:
a master mold preparation step of preparing a master mold that has a base material and a coating portion, the coating portion being made of a nickel alloy, coating the base material, and having a surface formed into a shape corresponding to a shape of the one surface of the spectacle lens;
a cutting step of cutting a recess corresponding to the protrusion into a surface of the coating portion of the master mold;
a transfer mold production step of producing a transfer mold by performing electroforming on the coating portion of the master mold in which the recess has been cut, the transfer mold having a surface that is complementary to the surface of the coating portion; and
a first mold production step of producing a first mold by performing electroforming on the surface of the transfer mold, the first mold having a surface that is complementary to the surface of the transfer mold.

2. A method for producing a spectacle lens with use of a molding mold that has been produced using the method for producing a molding mold according to claim 1, the method comprising:
a step of defining a lens molding space by holding the first mold and a second mold spaced apart from each other by a predetermined distance, the second mold having a surface formed into a shape corresponding to a shape of another surface of the spectacle lens;
a resin loading step of loading a resin into the space between the first mold and the second mold; and
a release step of removing a spectacle lens composed of the cured resin from the first mold and the second mold.

3. The method for producing a spectacle lens according to claim 2, further comprising:
prior to the resin loading step,
an HC material application step of applying a hard coating material to the surface of at least one of the molds.

4. The method for producing a spectacle lens according to claim 2 or 3,
wherein a surface of the protrusion has a substantially hemispherical shape.

5. The method for producing a spectacle lens according to any one of claims 2 to 4,
wherein the resin is a thermosetting resin.
